# EUROPEAN PATENT APPLICATION

(11) **EP 4 836 231 A1**
(43) Date of publication of application: **04.11.2026**
(21) Application number: 26174224.1
(22) Date of filing: 23.04.2026
(51) Int. Cl.: H02J 7/96, H02J 7/80

(54) **CHARGING DEVICE WITH CONTROLLED VOLTAGE REDUCTION UPON DISCONNECTION**

(30) Priority: 30.04.2025 CN 202510570260
(71) Applicant: Anker Innovations Technology Co., Ltd., Changsha, Hunan 410221 (CN)
(72) Inventor: WANG, Dingguo, Changsha City, 410221 (CN)
(74) Representative: De Arpe Tejero, Manuel

(57) **Abstract**

A charging device is disclosed. The charging device includes: a charging circuit (10) including a primary circuit (11) and a secondary circuit (12) connected to the primary circuit (11); at least one charging interface (20) connected to the secondary circuit (12), with the charging circuit (10) charging a charged device through the charging interface (20); an optical coupling circuit (30), a voltage adjustment circuit (40) and a first control circuit (50). An output terminal of the optical coupling circuit (30) is connected to the primary circuit (11), and an input terminal of the optical coupling circuit (30) is connected to the voltage adjustment circuit (40). The voltage adjustment circuit (40) is respectively connected to the secondary circuit (12) and the first control circuit (50). The first control circuit (50) is connected to the secondary circuit (12) and configured to obtain a charging voltage of the charged device.

## Description

### TECHNICAL FIELD

The present disclosure relates to the field of power supplies, and in particular to a charging device.

### BACKGROUND ART

With the rapid development of electronic devices such as smart phones and tablet computers, chargers adapted to electronic devices are used to charge at least one electronic device. For example, a charger charges a mobile phone.

When an electronic device is unplugged from a charging interface of a charger, the secondary circuit of the charger drops to a charging voltage to 5V, for example, from 9V to 5V. At this time, the primary circuit of the charger stops working, and energy in the primary circuit cannot be released through a loop. Since the energy is not released, a large current will be generated when the primary circuit starts to work again, which may cause damage to the components of the primary circuit.

### SUMMARY OF THE DISCLOSURE

The main purpose of this disclosure is to provide a charging device to solve the problem of damage to switching components of the primary circuit.

This disclosure provides a charging device, including: a charging circuit, including a primary circuit and a secondary circuit connected to the primary circuit; at least one charging interface, connected to the secondary circuit, where the charging circuit charges a charged device through the charging interface; an optical coupling circuit, a voltage adjustment circuit and a first control circuit, where an output terminal of the optical coupling circuit is connected to the primary circuit, an input terminal of the optical coupling circuit is connected to the voltage adjustment circuit, the voltage adjustment circuit is respectively connected to the secondary circuit and the first control circuit, and the first control circuit is connected to the secondary circuit and configured to obtain a charging voltage of the charged device.

Herein, the first control circuit is further configured to obtain a preset time, and in response to the charged device being unplugged from the charging interface, the first control circuit is configured to adjust a bus voltage of the secondary circuit, making a process of the bus voltage dropping from the charging voltage to an initial voltage last for the preset time.

Herein, the charging device includes one charging interface, and the first control circuit is configured to, in response to the charged device being unplugged from the charging interface, set a plurality of sequentially-decreasing reference voltages based on the preset time, the charging voltage and the initial voltage, and gradually reduce a first output voltage provided to the voltage adjustment circuit according to the reference voltages, so as to gradually reduce the bus voltage through the first output voltage.

Herein, the charging device includes one charging interface, and the voltage adjustment circuit includes a first resistor, a second resistor, a third resistor, a fourth resistor, a first capacitor and a second capacitor. A first terminal of the first control circuit is connected to the secondary circuit and configured to obtain the charging voltage of the charged device. A second terminal of the first control circuit is connected to the secondary circuit through the first resistor and the second resistor. The optical coupling circuit is connected in parallel with the first resistor. The second terminal of the first control circuit is configured to output the first output voltage. A third terminal of the first control circuit is connected to the first resistor through the first capacitor and the third resistor, and a fourth terminal of the first control circuit is connected to the first resistor through the second capacitor and the fourth resistor.

Herein, the voltage adjustment circuit further includes a first switching transistor, a fifth resistor and a sixth resistor. A fifth terminal of the first control circuit is connected to a control terminal of the first switching transistor. A first terminal of the first switching transistor is connected to the secondary circuit through the fifth resistor. A second terminal of the first switching transistor is grounded. The sixth resistor is connected between the control terminal and the second terminal of the first switching transistor.

The first control circuit is configured to control the first switching transistor to be turned on in response to the charged device being unplugged from the charging interface, so that an output capacitor of the secondary circuit discharges through the fifth resistor.

Herein, the charging device includes a plurality of charging interfaces, and the first control circuit is configured to obtain a second output voltage of each of the charging interfaces, and control the voltage adjustment circuit to adjust the bus voltage of the secondary circuit based on the second output voltage.

Herein, the voltage adjustment circuit includes a seventh resistor, an eighth resistor, a voltage regulator, a ninth resistor, a tenth resistor, an eleventh resistor, a twelfth resistor, a third capacitor, a second switching transistor, a thirteenth resistor, a third switching transistor and a fourteenth resistor.

A second terminal of the voltage regulator is connected to the secondary circuit through the eighth resistor and the seventh resistor. A third terminal of the voltage regulator is grounded. One terminal of the ninth resistor is connected to the secondary circuit, and the other terminal of the ninth resistor is grounded through the tenth resistor and the eleventh resistor. The optical coupling circuit is connected in parallel with the eighth resistor. A first terminal of the voltage regulator is connected between the tenth resistor and the eleventh resistor. One terminal of the third capacitor is connected to the second terminal of the voltage regulator, and the other terminal of the third capacitor is connected between the tenth resistor and the eleventh resistor through the twelfth resistor.

A first terminal of the second switching transistor is connected between the tenth resistor and the eleventh resistor through the thirteenth resistor. A second terminal of the second switching transistor is grounded. A first terminal of the third switching transistor is connected between the tenth resistor and the eleventh resistor through the fourteenth resistor. A second terminal of the third switching transistor is grounded, and control terminals of the second switching transistor and the third switching transistor are respectively connected to the first control circuit.

Herein, the first control circuit includes a micro control unit and a protocol chip. The protocol chip is respectively connected to the secondary circuit and the micro control unit. The micro control unit is respectively connected to the control terminals of the second switching transistor and the third switching transistor. The micro control unit obtains the second output voltage through the protocol chip.

The micro control unit is configured to control the second switching transistor and the third switching transistor to be turned off in response to the second output voltage being less than or equal to a first preset voltage, with the bus voltage being equal to the first preset voltage;
The micro control unit is configured to control an operation of the second switching transistor through a first control signal and control the third switching transistor to be turned off in response to the second output voltage being greater than the first preset voltage and less than or equal to a second preset voltage, with the bus voltage being greater than the first preset voltage and less than or equal to the second preset voltage.

The micro control unit is configured to control the operation of the second switching transistor through the first control signal and control the operation of the third switching transistor through a second control signal in response to the second output voltage being greater than the second preset voltage and less than or equal to a third preset voltage, with the bus voltage being greater than the second preset voltage and less than or equal to the third preset voltage, the third preset voltage being greater than the second preset voltage, and the second preset voltage being greater than the first preset voltage.

Herein, the micro control unit is configured to control the operation of the second switching transistor through the first control signal and control the operation of the third switching transistor through the second control signal in response to the charged device being unplugged from the charging interface, so as to adjust the bus voltage and make the process of the bus voltage dropping from the charging voltage to the initial voltage last for the preset time.

Herein, the voltage adjustment circuit further includes a fourth switching transistor and a fifteenth resistor. A first terminal of the fourth switching transistor is connected between the tenth resistor and the eleventh resistor through the fifteenth resistor. A second terminal of the fourth switching transistor is grounded. A control terminal of the fourth switching transistor is connected to the first control circuit.

Herein, the first control circuit is configured to control the second switching transistor, the third switching transistor and the fourth switching transistor to be turned off in response to the second output voltage being less than or equal to a first preset voltage, with the bus voltage being equal to the first preset voltage.

The first control circuit is configured to control the second switching transistor to be turned on and control the third switching transistor and the fourth switching transistor to be turned off in response to the second output voltage being greater than the first preset voltage and less than or equal to a second preset voltage, with the bus voltage being equal to the second preset voltage.

The first control circuit is configured to control the second switching transistor and the third switching transistor to be turned on and control the fourth switching transistor to be turned off in response to the second output voltage being greater than the second preset voltage and less than or equal to a third preset voltage, with the bus voltage being equal to the third preset voltage.

The first control circuit is configured to control the second switching transistor, the third switching transistor and the fourth switching transistor to be turned on in response to the second output voltage being greater than the third preset voltage and less than or equal to a fourth preset voltage, with the bus voltage being equal to the fourth preset voltage.

The fourth preset voltage is greater than the third preset voltage, the third preset voltage is greater than the second preset voltage, and the second preset voltage is greater than the first preset voltage.

Herein, the primary circuit includes a second control circuit, a PFC circuit, a flyback circuit and a transformer. The PFC circuit, the flyback circuit and the transformer are connected in sequence. The transformer is connected to the secondary circuit. The second control circuit is respectively connected to the output terminal of the optical coupling circuit, the PFC circuit and the flyback circuit, and the second control circuit is configured to receive a control signal from the optical coupling circuit in response to the charged device being unplugged from the charging interface, and control the PFC circuit and the flyback circuit based on the control signal, so as to adjust the bus voltage.

Herein, the first control circuit includes an operational amplifier, a switching transistor, a first voltage-dividing resistor and a second voltage-dividing resistor. A first terminal of the first control circuit is connected to the secondary circuit and grounded through the first voltage-dividing resistor and the second voltage-dividing resistor. A first input terminal of the operational amplifier receives the reference voltages. A second input terminal of the operational amplifier is connected between the first voltage-dividing resistor and the second voltage-dividing resistor. A fourth terminal of the first control circuit is connected to the second input terminal of the operational amplifier. An output terminal of the operational amplifier is connected to a control terminal of the switching transistor. A first terminal of the switching transistor is connected to the voltage adjustment circuit through a second terminal of the first control circuit. A second terminal of the switching transistor is grounded.

Herein, the optical coupling circuit includes a light source, a photoelectric sensor, a first voltage regulator, a resistor and a capacitor. The light source is connected in parallel with the first resistor. One terminal of the photoelectric sensor is connected to the second control circuit of the primary circuit through the resistor. An anode of the first voltage regulator is grounded. A cathode of the first voltage regulator is connected to one terminal of the photoelectric sensor. One terminal of the capacitor is connected between the second control circuit and the resistor. The other terminal of the capacitor is grounded. The other terminal of the photoelectric sensor is grounded.

Herein, the secondary circuit includes a bus, a power switch, an output capacitor and a resistor. The bus is connected to a terminal of the charging interface through the power switch. The power switch is connected to a terminal of the first control circuit through the resistor. The bus is grounded through the output capacitor and connected to the second resistor. A terminal of the first control circuit is grounded.

Herein, the secondary circuit includes a synchronous rectification circuit, a plurality of conversion circuits and a plurality of power switches. The synchronous rectification circuit is connected to a corresponding charging interface in sequence through the conversion circuits and the power switches.

The beneficial effects of this disclosure are as follows. The charging device of this disclosure includes a charging circuit, at least one charging interface, an optical coupling circuit, a voltage adjustment circuit and a first control circuit. The charging circuit includes a primary circuit and a secondary circuit connected to the primary circuit. The charging interface is connected to the secondary circuit, and the charging circuit charges a charged device through the charging interface. An output terminal of the optical coupling circuit is connected to the primary circuit. An input terminal of the optical coupling circuit is connected to the voltage adjustment circuit. The voltage adjustment circuit is respectively connected to the secondary circuit and the first control circuit. The first control circuit is connected to the secondary circuit and configured to obtain the charging voltage of the charged device. The first control circuit is further configured to obtain a preset time, and in response to the charged device being unplugged from the charging interface, the first control circuit is configured to adjust the bus voltage of the secondary circuit, making the process of the bus voltage dropping from the charging voltage to an initial voltage last for the preset time. By adjusting the bus voltage of the secondary circuit through the first control circuit to make the process of the bus voltage dropping from the charging voltage to the initial voltage last for the preset time, the duration of the bus voltage dropping from the charging voltage to the initial voltage is increased, realizing a slow drop of the bus voltage and implementing a soft turn-off strategy, which can prolong the service life of components such as the transformer in the primary circuit. The optical coupling circuit realizes signal isolation and delayed energy release between the primary circuit and the secondary circuit, effectively reducing the energy accumulation of the primary circuit at the moment of being turned off, reducing the transient stress caused by the turn-off of the charging device, and thus reducing the risk of damage to the charging device.

### BRIEF DESCRIPTION OF THE DRAWINGS

In order to explain the technical solutions in the embodiments of this disclosure more clearly, the drawings required for the description of the embodiments will be briefly introduced below. Obviously, the drawings in the following description are only some embodiments of this disclosure, and those skilled in the art can obtain other drawings based on these drawings without creative work.
FIG. 1 is a frame schematic diagram of a first embodiment of a charging device provided by this disclosure.
FIG. 2 is an equivalent circuit schematic diagram of a first embodiment of a first control circuit in FIG. 1.
FIG. 3 is a schematic diagram of a first embodiment of a reference voltage of the first control circuit in FIG. 2.
FIG. 4 is a circuit schematic diagram of the first embodiment of the charging device in FIG. 1.
FIG. 5 is a circuit schematic diagram of a second embodiment of the charging device in FIG. 1.
FIG. 6 is a schematic diagram of a first embodiment of a first output voltage of the first control circuit in FIG. 5.
FIG. 7 is a frame schematic diagram of a second embodiment of the charging device provided by this disclosure.
FIG. 8 is a circuit schematic diagram of a first embodiment of the first control circuit, a voltage adjustment circuit, an optical coupling circuit and a second control circuit in FIG. 7.
FIG. 9 is a schematic diagram of a first embodiment of a micro control unit controlling a bus voltage in FIG. 8.
FIG. 10 is a circuit schematic diagram of a second embodiment of the first control circuit, the voltage adjustment circuit, the optical coupling circuit and the second control circuit in FIG. 7.

### DETAILED DESCRIPTION

The embodiments of the technical solution of this disclosure will be described in detail below with reference to the accompanying drawings. The following embodiments are only used to explain the technical solution of this disclosure more clearly, and thus are only examples, and cannot be used to limit the protection scope of this disclosure.

Unless otherwise defined, all technical and scientific terms used herein have the same meanings as those commonly understood by those skilled in the technical field to which this disclosure belongs; the terms used herein are only for the purpose of describing specific embodiments, and are not intended to limit this disclosure; the terms "include" and "have" and any variations thereof in the specification, claims and the above description of the drawings of this disclosure are intended to cover non-exclusive inclusion.

In the description of the embodiments of this disclosure, the technical terms "first", "second" and the like are only used to distinguish different objects, and cannot be understood as indicating or implying relative importance, or implicitly indicating the number, specific order or primary-secondary relationship of the indicated technical features.

Reference to "an embodiment" herein means that a specific feature, structure or characteristic described in conjunction with the embodiment may be included in at least one embodiment of this disclosure. The appearance of the phrase in various positions in the specification does not necessarily refer to the same embodiment, nor is it an independent or alternative embodiment mutually exclusive with other embodiments. Those skilled in the art explicitly and implicitly understand that the embodiments described herein may be combined with other embodiments.

In the description of the embodiments of this disclosure, the term "and/or" is only a relational description of associated objects, indicating that three relationships may exist, for example, A and/or B, which may indicate: A exists alone, A and B exist at the same time, and B exists alone. In addition, the character "/" herein generally indicates that the associated objects before and after are in an "or" relationship.

In the description of the embodiments of this disclosure, the term "a plurality of" refers to two or more (including two); similarly, "a plurality of groups" refers to two or more groups (including two groups), and "a plurality of pieces" refers to two or more pieces (including two pieces).

In the description of the embodiments of this disclosure, unless otherwise clearly specified and limited, the technical terms "install", "connect", "fix" and the like should be understood in a broad sense. For example, it may be a fixed connection, a detachable connection, or an integral connection; it may also be a mechanical connection or an electrical connection; it may be a direct connection or an indirect connection through an intermediate medium, and it may be the internal communication between two components or the interaction relationship between two components. For those of ordinary skill in the art, the specific meanings of the above terms in the embodiments of this disclosure can be understood according to specific situations.

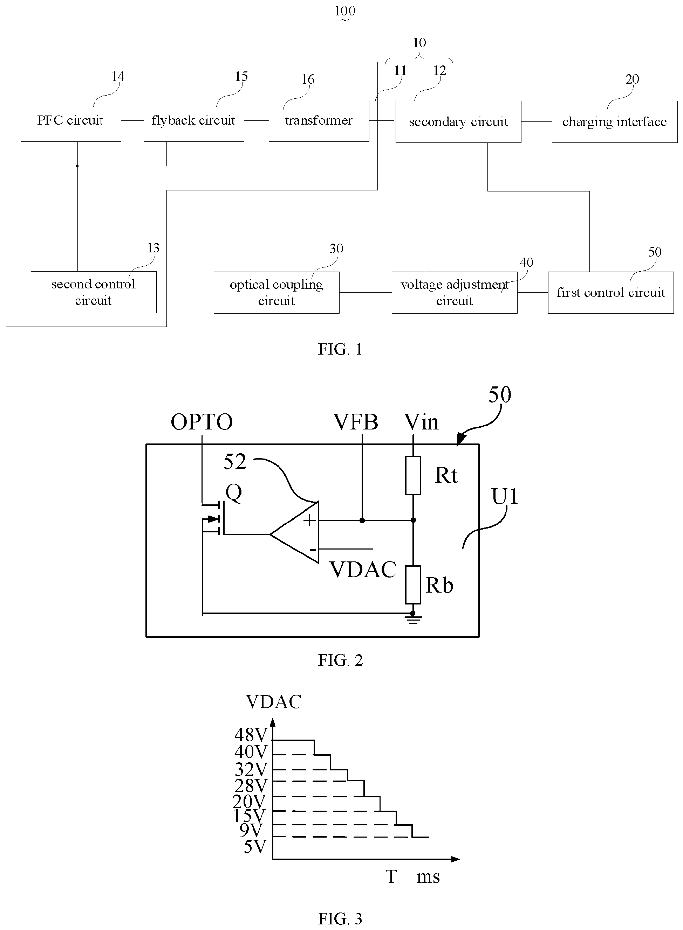

This disclosure may provide a charging device as shown in FIG. 1, which is a frame schematic diagram of a first embodiment of a charging device provided by this disclosure. The charging device 100 of this embodiment may include a charging circuit 10, at least one charging interface 20, an optical coupling circuit 30, a voltage adjustment circuit 40 and a first control circuit 50, where the charging device 100 may include but may be not limited to a charger.

The charging circuit 10 may include a primary circuit 11 and a secondary circuit 12, and the primary circuit 11 may be connected to the secondary circuit 12. At least one charging interface 20 may be connected to the secondary circuit 12, and the charging circuit 10 may charge a charged device through the charging interface 20, where the charged device may include but may be not limited to electronic devices such as mobile phones and tablet computers. Herein, the charging device 100 may include one charging interface 20 or a plurality of charging interfaces 20, and the charging interface 20 may include but may be not limited to a Type-C terminal (USB Type-C terminal).

An output terminal of the optical coupling circuit 30 may be connected to the primary circuit 11, and an input terminal of the optical coupling circuit 30 may be connected to the voltage adjustment circuit 40. The voltage adjustment circuit 40 may be respectively connected to the secondary circuit 12 and the first control circuit 50. The first control circuit 50 may be connected to the secondary circuit 12 and configured to obtain a charging voltage of the charged device. Herein, the charging voltage of the charged device may be a voltage provided by the secondary circuit 12 to the charged device through the charging interface 20. For example, the charging voltage may range from 9V to 48V.

In some embodiments, the optical coupling circuit 30 may serve as a feedback circuit and may be configured to feed back a change of the bus voltage of the secondary circuit 12 to the primary circuit 11. For example, the optical coupling circuit 30 may send a control signal to the primary circuit 11.

The first control circuit 50 may be configured to obtain a preset time, that may be, the first control circuit 50 may obtain a charging protocol of the charging device 100 and obtain the preset time through the charging protocol. For example, the first control circuit 50 may obtain that the charging protocol of the charging device 100 may be the PD (USB Power Delivery) protocol, and in the PD protocol, the preset time may be 275ms.

The first control circuit 50 may be configured to adjust the bus voltage of the secondary circuit 12 in response to the charged device being unplugged from the charging interface 20, making a process of the bus voltage dropping from the charging voltage to an initial voltage last for the preset time. Herein, the initial voltage may include but may be not limited to 5V.

In response to the charged device being unplugged from the charging interface 20, the bus voltage of the secondary circuit 12 may drop from the charging voltage to the initial voltage. For example, the bus voltage of the secondary circuit 12 may drop from 48V to 5V. Herein, the first control circuit 50 may be configured to adjust the bus voltage of the secondary circuit 12 to make the drop process last for the preset time. For example, the first control circuit 50 may be configured to make the process of the bus voltage dropping from the charging voltage to the initial voltage last for 275ms. In other embodiments, the preset time for the bus voltage to drop from the charging voltage to the initial voltage may be less than 275ms and set close to 275ms. For example, the preset time may be 270ms.

The charging device 100 may adjust the bus voltage of the secondary circuit 12 through the first control circuit 50 to make the drop process last for the preset time, increasing the duration of the bus voltage dropping from the charging voltage to the initial voltage, realizing a slow drop of the bus voltage and implementing a soft turn-off strategy (i.e., the bus voltage may gradually decrease to the initial voltage), which can prolong the service life of components such as a transformer in the primary circuit 11.

In some embodiments, the primary circuit 11 may include a second control circuit 13, a PFC (Power Factor Correction) circuit 14, a flyback circuit 15 and a transformer 16.

The PFC circuit 14, the flyback circuit 15 and the transformer 16 may be connected in sequence. The transformer 16 may be connected to the secondary circuit 12, and the second control circuit 13 may be respectively connected to the output terminal of the optical coupling circuit 30, the PFC circuit 14 and the flyback circuit 15. The second control circuit 13 may be configured to control the PFC circuit 14 and the flyback circuit 15 based on the feedback of the optical coupling circuit 30.

The second control circuit 13 may be configured to receive a control signal from the optical coupling circuit 30 in response to the charged device being unplugged from the charging interface 20, and control the PFC circuit 14 and the flyback circuit 15 based on the control signal. Herein, the flyback circuit 15 may be a hybrid flyback circuit in the related art, and the second control circuit 13 may be a control circuit for the PFC and the flyback circuit.

The output terminal of the optical coupling circuit 30 of this embodiment may be connected to the primary circuit 11, and the input terminal of the optical coupling circuit 30 may be connected to the voltage adjustment circuit 40. The voltage adjustment circuit 40 may be respectively connected to the secondary circuit 12 and the first control circuit 50. The first control circuit 50 may be connected to the secondary circuit 12 and configured to obtain the charging voltage of the charged device. In response to the charged device being unplugged from the charging interface 20, the first control circuit 50 may be configured to adjust the bus voltage of the secondary circuit 12, making the process of the bus voltage dropping from the charging voltage to the initial voltage last for the preset time. By adjusting the bus voltage of the secondary circuit 12 through the first control circuit 50 to make the drop process last for the preset time, the duration of the bus voltage dropping from the charging voltage to the initial voltage may be increased, realizing the slow drop of the bus voltage and implementing the soft turn-off strategy, which can prolong the service life of components such as the transformer 16 in the primary circuit 11. In addition, the charging device 100 may realize signal isolation and delayed energy release between the primary circuit 11 and the secondary circuit 12 through the optical coupling circuit 30, effectively reducing the energy accumulation of the primary circuit 11 at the moment of being turned off, reducing the transient stress caused by the turn-off of the charging device 100, and thus reducing the risk of damage to the charging device 100.

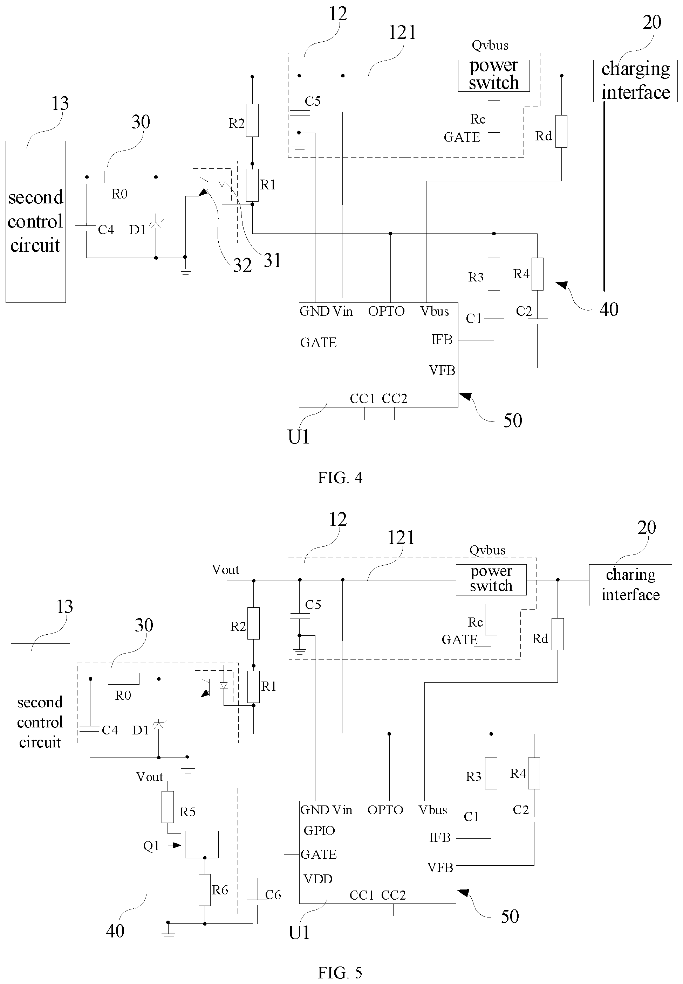

According to some embodiments of this disclosure, as shown in FIGS. 1 to 4, FIG. 2 is an equivalent circuit schematic diagram of a first embodiment of the first control circuit in FIG. 1. FIG. 3 is a schematic diagram of a first embodiment of a reference voltage of the first control circuit in FIG. 2. FIG. 4 is a circuit schematic diagram of the first embodiment of the charging device in FIG. 1. The charging device 100 of this embodiment may include one charging interface 20, and the first control circuit 50 may be configured to, in response to the charged device being unplugged from the charging interface 20, set a plurality of sequentially-decreasing reference voltages VDAC based on the preset time, the charging voltage and the initial voltage, and gradually reduce a first output voltage provided to the voltage adjustment circuit 40 according to the reference voltages VDAC, so as to gradually reduce the bus voltage through the first output voltage.

In some embodiments, the first control circuit 50 may include a protocol chip U1. The protocol chip U1 may be configured to identify the charging protocol of the charging device 100. A terminal CC1 and a terminal CC2 of the protocol chip U1 may be configured to detect whether the charged device may be plugged into or unplugged from the charging interface 20. In response to the protocol chip U1 detecting that the charged device may be unplugged from the charging interface 20, the first control circuit 50 may set a plurality of sequentially-decreasing reference voltages VDAC based on the preset time, the charging voltage and the initial voltage, and may gradually reduce the first output voltage provided to the voltage adjustment circuit 40 according to the reference voltages VDAC.

For example, the protocol chip U1 may obtain a voltage difference by subtracting the initial voltage from the charging voltage, and divide the voltage difference into a plurality of reference voltages VDAC based on the preset time. That may be, the charging voltage may be 48V, the initial voltage may be 5V, the plurality of reference voltages VDAC may include but may be not limited to 48V, 40V, 32V, 28V, 20V, 15V, 9V and 5V, and the plurality of reference voltages VDAC may decrease step by step with the increase of time. At this time, the protocol chip U1 may gradually reduce the first output voltage provided to the voltage adjustment circuit 40 according to the plurality of reference voltages VDAC, so as to gradually reduce the bus voltage through the first output voltage.

The equivalent circuit of the first control circuit 50 may include an operational amplifier 52, a switching transistor Q, a first voltage-dividing resistor Rt and a second voltage-dividing resistor Rb. A first terminal Vin of the first control circuit 50 may be connected to the secondary circuit 12 and grounded through the first voltage-dividing resistor Rt and the second voltage-dividing resistor Rb. A first input terminal of the operational amplifier 52 may receive the reference voltage VDAC. A second input terminal of the operational amplifier 52 may be connected between the first voltage-dividing resistor Rt and the second voltage-dividing resistor Rb. A fourth terminal VFB of the first control circuit 50 may be connected to the second input terminal of the operational amplifier 52. An output terminal of the operational amplifier 52 may be connected to a control terminal of the switching transistor Q. A first terminal of the switching transistor Q may be connected to the voltage adjustment circuit 40 through a second terminal OPTO of the first control circuit 50, and a second terminal of the switching transistor Q may be grounded. Herein, the switching transistor Q may be an NMOS transistor, the control terminal of the switching transistor Q may be a gate of the switching transistor Q, the first terminal of the switching transistor Q may be a drain of the switching transistor Q, and the second terminal of the switching transistor Q may be a source of the switching transistor Q. In other embodiments, the switching transistor Q may be a PMOS transistor.

In some embodiments, the voltage adjustment circuit 40 may include a first resistor R1, a second resistor R2, a third resistor R3, a fourth resistor R4, a first capacitor C1 and a second capacitor C2. The first terminal Vin of the first control circuit 50 may be connected to the secondary circuit 12 and configured to obtain the charging voltage of the charged device. The second terminal OPTO of the first control circuit 50 may be connected to the secondary circuit 12 in sequence through the first resistor R1 and the second resistor R2. The optical coupling circuit 30 may be connected in parallel with the first resistor R1, that may be, the input terminal of the optical coupling circuit 30 may be connected to both terminals of the first resistor R1. The second terminal OPTO of the first control circuit 50 may be configured to output the first output voltage. A third terminal IFB of the first control circuit 50 may be connected to the first resistor R1 in sequence through the first capacitor C1 and the third resistor R3, and a fourth terminal VFB of the first control circuit 50 may be connected to the first resistor R1 in sequence through the second capacitor C2 and the fourth resistor R4. Herein, the second capacitor C2 and the fourth resistor R4 connected between the fourth terminal VFB and the second terminal OPTO of the first control circuit 50 may be equivalent to second-order loop compensation. A capacitance value of the second capacitor C2 may be 100nF.

The first control circuit 50 may be configured to control the second terminal OPTO of the first control circuit 50 based on the plurality of reference voltages VDAC, so that the first output voltage provided to the voltage adjustment circuit 40 may gradually decrease, so as to gradually reduce the bus voltage through the first output voltage. For example, the plurality of reference voltages VDAC may gradually decrease from 48V, 40V, 32V, 28V, 20V, 15V, 9V to 5V, and at this time, the first output voltage output by the second terminal OPTO of the first control circuit 50 may decrease accordingly.

In some embodiments, the optical coupling circuit 30 may include a light source 31, a photoelectric sensor 32, a first voltage regulator D1, a resistor R0 and a capacitor C4. The light source 31 may be connected in parallel with the first resistor R1. One terminal of the photoelectric sensor 32 may be connected to the second control circuit 13 of the primary circuit 11 through the resistor R0. An anode of the first voltage regulator D1 may be grounded, a cathode of the first voltage regulator D1 may be connected to one terminal of the photoelectric sensor 32. One terminal of the capacitor C4 may be connected between the second control circuit 13 and the resistor R0, the other terminal of the capacitor C4 may be grounded, and the other terminal of the photoelectric sensor 32 may be grounded.

In some embodiments, the secondary circuit 12 may include a bus 121, a power switch Qvbus, an output capacitor C5 and a resistor Rc. The bus 121 may be connected to a terminal Vbus of the charging interface 20 through the power switch Qvbus. The power switch Qvbus may be connected to a terminal Gate of the first control circuit 50 through the resistor Rc. The bus 121 may be grounded through the output capacitor C5. The bus 121 may be connected to the second resistor R2. A terminal Vbus of the first control circuit 50 may be connected between the power switch Qvbus and the charging interface 20 through a resistor Rd. A terminal GND of the first control circuit 50 may be grounded.

In some embodiments, the plurality of reference voltages VDAC may change and decrease step by step, and the first output voltage output by the second terminal OPTO of the first control circuit 50 may change and decrease step by step, so as to gradually reduce the bus voltage through the first output voltage. The control signal of the optical coupling circuit 30 received by the second control circuit 13 may also change step by step, which can delay the primary circuit 11 to be turned off, thereby realizing the delayed release of energy of the primary circuit 11 at the moment of being turned off. The optical coupling circuit 30 may realize signal isolation and delayed energy release between the primary circuit 11 and the secondary circuit 12, effectively reducing the energy accumulation of the primary circuit 11 at the moment of being turned off, reducing the transient stress caused by the turn-off of the charging device 100, and thus reducing the risk of damage to the charging device 100.

The first control circuit 50 of this embodiment may be configured to, in response to the charged device being unplugged from the charging interface 20, set a plurality of sequentially-decreasing reference voltages VDAC based on the preset time, the charging voltage and the initial voltage, and control the second terminal OPTO of the first control circuit 50 based on the plurality of reference voltages VDAC to make the first output voltage provided to the voltage adjustment circuit 40 gradually decrease, so as to realize the slow drop of the bus voltage and implementing the soft turn-off strategy, which can prolong the service life of components such as the transformer 16 in the primary circuit 11.

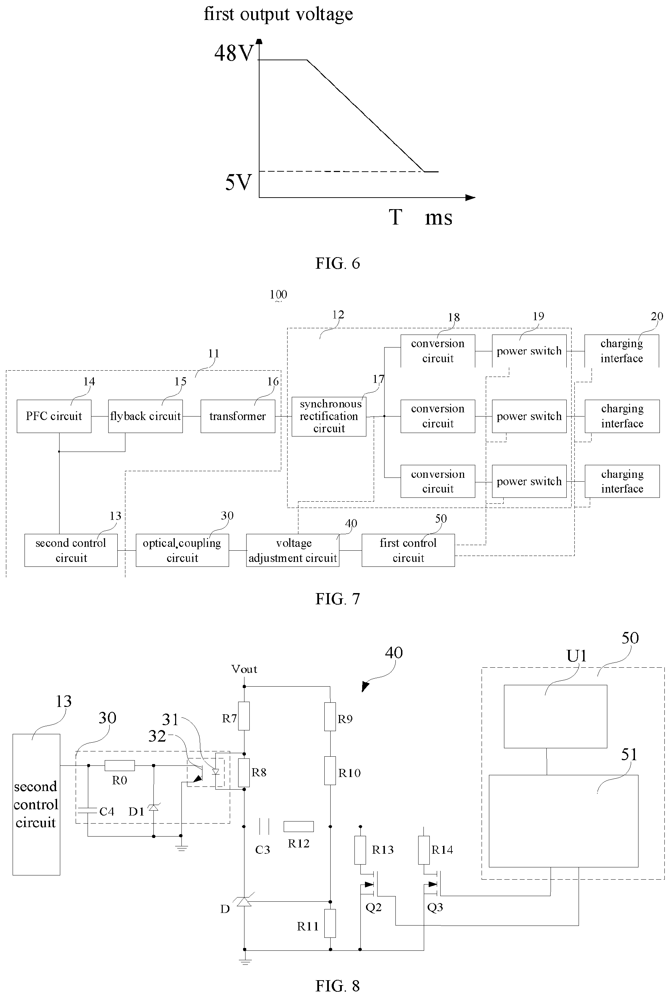

According to some embodiments of this disclosure, as shown in FIGS. 5 and 6, FIG. 5 is a circuit schematic diagram of a second embodiment of the charging device in FIG. 1. FIG. 6 is a schematic diagram of a first embodiment of a first output voltage of the first control circuit in FIG. 5. The difference between the charging device 100 of this embodiment and the charging device 100 in FIG. 4 may be that the voltage adjustment circuit 40 of this embodiment may further include a first switching transistor Q1, a fifth resistor R5 and a sixth resistor R6.

A fifth terminal GPIO of the first control circuit 50 may be connected to a control terminal of the first switching transistor Q1. A first terminal of the first switching transistor Q1 may be connected to the secondary circuit 12 through the fifth resistor R5. For example, the first terminal of the first switching transistor Q1 may be connected to the bus 121 of the secondary circuit 12 through the fifth resistor R5. A second terminal of the first switching transistor Q1 may be grounded, and the sixth resistor R6 may be connected between the control terminal and the second terminal of the first switching transistor Q1.

In some embodiments, a terminal VDD of the first control circuit 50 may be connected to the sixth resistor R6 through a capacitor C6, that may be, the terminal VDD of the first control circuit 50 may be grounded through the capacitor C6.

The first control circuit 50 may be configured to control the first switching transistor Q1 to be turned on in response to the charged device being unplugged from the charging interface 20, so that the output capacitor C5 of the secondary circuit 12 may discharge through the fifth resistor R5. At this time, the first terminal Vin of the first control circuit 50 may detect an obvious change in the bus voltage, the operational amplifier 52 of the first control circuit 50 may perform a comparison, the first output voltage output by the second terminal OPTO of the first control circuit 50 may change slowly, and the control signal of the optical coupling circuit 30 received by the second control circuit 13 may also change slowly, thus being able to delay the primary circuit 11 to be turned off, thereby realizing the delayed release of energy of the primary circuit 11 at the moment of being turned off and reducing the damage to the components of the primary circuit 11.

In some embodiments, the capacitance value of the second capacitor C2 may be 200nF, which can further slow down the change rate of the first output voltage output by the second terminal OPTO of the first control circuit 50 compared with the capacitance value of the second capacitor C2 of 100nF in FIG. 4.

The first control circuit 50 of this embodiment may be configured to control of the first switching transistor Q1 to be turned on in response to the charged device being unplugged from the charging interface 20, so that the output capacitor C5 of the secondary circuit 12 may discharge through the fifth resistor R5, thus being able to delay the stop of the primary circuit 11, release the energy of the primary circuit 11, and reduce the damage to the components of the primary circuit 11.

According to some embodiments of this disclosure, as shown in FIGS. 7 and 8, FIG. 7 is a frame schematic diagram of a second embodiment of the charging device provided by this disclosure, and FIG. 8 is a circuit schematic diagram of a first embodiment of the first control circuit, a voltage adjustment circuit, an optical coupling circuit and a second control circuit in FIG. 7. The charging device 100 of this embodiment may include a plurality of charging interfaces 20, and each of the plurality of charging interfaces 20 may be a Type-C terminal.

The first control circuit 50 may be configured to obtain a second output voltage of each of the charging interfaces 20, and the second output voltage of the charging interfaces 20 may be the charging voltage. The first control circuit 50 may be configured to control the voltage adjustment circuit 40 to adjust the bus voltage of the secondary circuit 12 based on the second output voltage.

In some embodiments, in response to the charged device being plugged into each of the charging interfaces 20, the first control circuit 50 may obtain a plurality of second output voltages corresponding to the plurality of charging interfaces 20, obtain a maximum second output voltage from the plurality of second output voltages, and control the voltage adjustment circuit 40 to adjust the bus voltage of the secondary circuit 12 based on the maximum second output voltage, with the bus voltage following the change of the maximum second output voltage, that may be, the difference between an adjusted bus voltage and the maximum second output voltage may be approximately zero. For example, the adjusted bus voltage may be equal to the maximum second output voltage, or an absolute value of the difference between the adjusted bus voltage and the maximum second output voltage may tend to zero.

The first control circuit 50 of this embodiment may be configured to obtain the second output voltage of each of the charging interfaces 20 and control the voltage adjustment circuit 40 to adjust the bus voltage of the secondary circuit 12 based on the second output voltage, thus being able to realize that the bus voltage may follow the maximum second output voltage, reduce the voltage difference across a conversion circuit of the secondary circuit 12, and improve the efficiency of the conversion circuit of the secondary circuit 12.

According to some embodiments of this disclosure, as shown in FIGS. 7 and 8, the voltage adjustment circuit 40 of this embodiment may include a seventh resistor R7, an eighth resistor R8, a voltage regulator D, a ninth resistor R9, a tenth resistor R10, an eleventh resistor R11, a twelfth resistor R12, a third capacitor C3, a second switching transistor Q2, a thirteenth resistor R13, a third switching transistor Q3 and a fourteenth resistor R14.

A second terminal of the voltage regulator D may be connected to the secondary circuit 12 through the eighth resistor R8 and the seventh resistor R7. For example, the second terminal of the voltage regulator D may be connected to the bus 121 of the secondary circuit 12 through the eighth resistor R8 and the seventh resistor R7. A third terminal of the voltage regulator D may be grounded. One terminal of the ninth resistor R9 may be connected to the secondary circuit 12, and the other terminal of the ninth resistor R9 may be grounded through the tenth resistor R10 and the eleventh resistor R11. The optical coupling circuit 30 may be connected in parallel with the eighth resistor R8. A first terminal of the voltage regulator D may be connected between the tenth resistor R10 and the eleventh resistor R11. One terminal of the third capacitor C3 may be connected to the second terminal of the voltage regulator D, and the other terminal of the third capacitor C3 may be connected between the tenth resistor R10 and the eleventh resistor R11 through the twelfth resistor R12.

A first terminal of the second switching transistor Q2 may be connected between the tenth resistor R10 and the eleventh resistor R11 through the thirteenth resistor R13. A second terminal of the second switching transistor Q2 may be grounded. A first terminal of the third switching transistor Q3 may be connected between the tenth resistor R10 and the eleventh resistor R11 through the fourteenth resistor R14. A second terminal of the third switching transistor Q3 may be grounded. Control terminals of the second switching transistor Q2 and the third switching transistor Q3 may be respectively connected to the first control circuit 50. Herein, both the second switch Q2 and the third switching transistor Q3 may be NMOS transistors. In other embodiments, the second switch Q2 and the third switching transistor Q3 may be PMOS transistors.

Herein, the optical coupling circuit 30 may include a light source 31, a photoelectric sensor 32, a first voltage regulator D1, a resistor R0 and a capacitor C4. The light source 31 may be connected in parallel with the eighth resistor R8. One terminal of the photoelectric sensor 32 may be connected to the second control circuit 13 of the primary circuit 11 through the resistor R0. An anode of the first voltage regulator D1 may be grounded. A cathode of the first voltage regulator D1 may be connected to one terminal of the photoelectric sensor 32. One terminal of the capacitor C4 may be connected between the second control circuit 13 and the resistor R0, and the other terminal of the capacitor C4 may be grounded. The other terminal of the photoelectric sensor 32 may be grounded.

In some embodiments, the first control circuit 50 may include a micro control unit (MCU) 51 and the protocol chip U1. The protocol chip U1 may be respectively connected to the secondary circuit 12 and the micro control unit 51, where the connection mode of the protocol chip U1 and the secondary circuit 12 may be the same as the connection mode of the protocol chip U1 and the secondary circuit 12 shown in FIG. 5, which will not be repeated here. The micro control unit 51 may be respectively connected to the control terminals of the second switching transistor Q2 and the third switching transistor Q3, and the micro control unit 51 may obtain the second output voltage through the protocol chip U1.

For example, the charging device 100 may include three charging interfaces 20 and three protocol chips U1. The three charging interfaces 20 may be arranged in one-to-one correspondence with the three protocol chips U1. The three protocol chips U1 may be connected in series for communication. A responding one of the three protocol chips U1 may be connected to the micro control unit 51. The responding one of the three protocol chips U1 and the micro control unit 51 communicate through a serial terminal. In this embodiment, the one of the protocol chips U1 connected to the micro control unit 51 may be the protocol chip U1 corresponding to the charging interface 20 with the maximum second output voltage.

The micro control unit 51 may be configured to control the second switching transistor Q2 and the third switching transistor Q3 to be turned off in response to the second output voltage being less than or equal to the first preset voltage, with the bus voltage being equal to the first preset voltage. For example, the first preset voltage may be 15.2V, the maximum second output voltage may be less than or equal to the first preset voltage, that may be, less than 16V, and the micro control unit 51 may control the second switching transistor Q2 and the third switching transistor Q3 to be turned off, with the bus voltage being equal to 15.2V at this time.

The micro control unit 51 may be configured to control the operation of the second switching transistor Q2 through a first control signal and control the third switching transistor Q3 to be turned off in response to the second output voltage being greater than the first preset voltage and less than or equal to a second preset voltage, with the bus voltage being greater than the first preset voltage and less than or equal to the second preset voltage.

For example, the second preset voltage may be 28.2V. In response to the maximum second output voltage being greater than 15.2V and less than or equal to 28.2V, the micro control unit 51 may control the operation of the second switching transistor Q2 through the first control signal, where the first control signal may be a pulse width modulation signal with a duty cycle ranging from 0% to 100%. The micro control unit 51 may control the third switching transistor Q3 to be turned off, and the bus voltage may be greater than the first preset voltage and less than or equal to the second preset voltage, i.e., the bus voltage may be greater than 15.2V and less than or equal to 28.2V.

In response to the micro control unit 51 controlling the second switching transistor Q2 to be turned on, the thirteenth resistor R13 may be connected in parallel with the eleventh resistor R11, and equivalent parallel resistance of the thirteenth resistor R13 and the eleventh resistor R11 may decrease, causing the voltage at the first terminal of the voltage regulator D to drop. The optical coupling circuit 30 may feed back the voltage change to the second control circuit 13, which then may control the primary circuit 11 to raise the bus voltage of the secondary circuit 12 for the purpose of maintaining the voltage at the first terminal of the voltage regulator D. For example, the voltage at the first terminal of the voltage regulator D may be maintained at 2.5V.

The micro control unit 51 may be configured to control the operation of the second switching transistor Q2 through the first control signal and control the operation of the third switching transistor Q3 through a second control signal in response to the second output voltage being greater than the second preset voltage and less than or equal to the third preset voltage, with the bus voltage being greater than the second preset voltage and less than or equal to the third preset voltage. Herein, the third preset voltage may be higher than the second preset voltage, and the second preset voltage may be higher than the first preset voltage.

For example, the third preset voltage may be 48.2V. In response to the maximum second output voltage being greater than 28.2V and less than or equal to 48.2V, the micro control unit 51 may control the second switching transistor Q2 to operate through the first control signal, and control the third switching transistor Q3 to operate through the second control signal. The first control signal and the second control signal may be pulse width modulation signals with a duty cycle ranging from 0% to 100%. The bus voltage may be greater than the first preset voltage and less than or equal to the second preset voltage, i.e., the bus voltage may be greater than 28.2V and less than or equal to 48.2V.

The micro control unit 51 of this embodiment may obtain the second output voltage through the protocol chip U1 and control the second switching transistor Q2 and the third switching transistor Q3 to make the bus voltage follow the second output voltage, thereby improving the efficiency of the conversion circuit of the secondary circuit 12. In addition, the micro control unit 51 may adjust the duty cycles of the first control signal and the second control signal to realize the adjustment of the bus voltage, which may follow the second output voltage and further improve the efficiency of the conversion circuit of the secondary circuit 12.

According to some embodiments of the present disclosure, as shown in FIGS. 7, 8 and 9, FIG. 9 is a schematic diagram of a first embodiment of a micro control unit controlling a bus voltage in FIG. 8. The micro control unit 51 may be configured to control the operation of the second switching transistor Q2 through the first control signal and control the operation of the third switching transistor Q3 through the second control signal in response to the charged device being unplugged from the charging interface 20, so as to adjust the bus voltage and make the process of the bus voltage dropping from the charging voltage to the initial voltage last for the preset time.

In response to the charged device being unplugged from any of the charging interfaces 20, the micro control unit 51 may detect the unplugging through the protocol chip U1, and then control the duty cycles of the first control signal and the second control signal to control the second switching transistor Q2 and the third switching transistor Q3 to operate, so as to realize the drop of the bus voltage and make the process of the bus voltage dropping from the charging voltage to the initial voltage last for the preset time. For example, the micro control unit 51 may adjust the duty cycles of the first control signal and the second control signal to make the bus voltage drop from 48.2V to 28.2V, and then from 28.2V to 15.2V, with the entire drop process lasting for the preset time of 275ms.

The control unit 51 of this embodiment may control the operation of the second switching transistor Q2 through the first control signal and the operation of the third switching transistor Q3 through the second control signal in response to the charged device being unplugged from the charging interface 20, so as to adjust the bus voltage and make the process of the bus voltage dropping from the charging voltage to the initial voltage last for the preset time. This may increase the duration of the bus voltage drop from the charging voltage to the initial voltage, obtain the slow drop of the bus voltage, and implement the soft turn-off strategy, which can prolong the service life of components such as the transformer 16 of the primary circuit 11. In addition, the charging device 100 may realize signal isolation and delayed energy release between the primary circuit 11 and the secondary circuit 12 through the optical coupling circuit 30, effectively reducing the energy accumulation of the primary circuit 11 at the moment of being turned off, reducing the transient stress caused by the turn-off of the charging device 100, and thus lowering the risk of damage to the charging device 100.

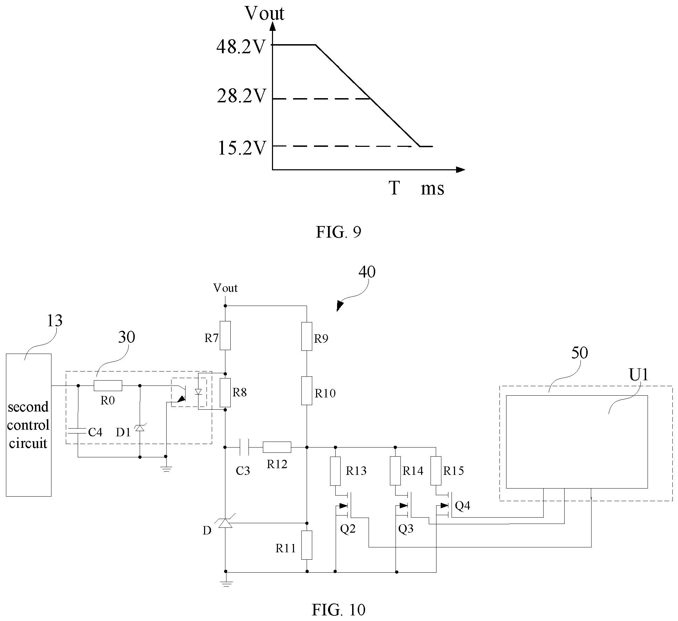

According to some embodiments of the present disclosure, as shown in FIG. 10, FIG. 10 is a circuit schematic diagram of a second embodiment of the first control circuit, the voltage adjustment circuit, the optical coupling circuit and the second control circuit in FIG. 7. The difference between the charging device 100 of this embodiment and the charging device 100 shown in FIG. 8 may be that the voltage adjustment circuit 40 may further include a fourth switching transistor Q4 and a fifteenth resistor R15. A first terminal of the fourth switching transistor Q4 may be connected between the tenth resistor R10 and the eleventh resistor R11 through the fifteenth resistor R15. A second terminal of the fourth switching transistor Q4 may be grounded. A control terminal of the fourth switching transistor Q4 may be connected to the first control circuit 50.

The first control circuit 50 of this embodiment may be the protocol chip U1, which may obtain the second output voltage. The first control circuit 50 may be configured to control the second switching transistor Q2, the third switching transistor Q3 and the fourth switching transistor Q4 to be turned off in response to the second output voltage being less than or equal to the first preset voltage, with the bus voltage being equal to the first preset voltage. For example, the first preset voltage may be 15.4V. In response to the second output voltage being less than or equal to 15.4V, the first control circuit 50 may control the second switching transistor Q2, the third switching transistor Q3 and the fourth switching transistor Q4 to be turned off, and the bus voltage may be equal to the first preset voltage, i.e., 15.4V.

The first control circuit 50 may be configured to control the second switching transistor Q2 to be turned on and the third switching transistor Q3 and the fourth switching transistor Q4 to be turned off in response to the second output voltage being greater than the first preset voltage and less than or equal to the second preset voltage, with the bus voltage being equal to the second preset voltage. For example, the second preset voltage may be 28.2V. In response to the second output voltage being greater than 15.4V and less than or equal to 28.2V, the first control circuit 50 may control the second switching transistor Q2 to be turned on and the third switching transistor Q3 and the fourth switching transistor Q4 to be turned off, and the bus voltage may be equal to 28.2V.

The first control circuit 50 may be configured to control the second switching transistor Q2 and the third switching transistor Q3 to be turned on and the fourth switching transistor Q4 to be turned off in response to the second output voltage being greater than the second preset voltage and less than or equal to the third preset voltage, with the bus voltage being equal to the third preset voltage. For example, the third preset voltage may be 36.2V. In response to the second output voltage being greater than 28.2V and less than or equal to 36.2V, the first control circuit 50 may control the second switching transistor Q2 and the third switching transistor Q3 to be turned on and the fourth switching transistor Q4 to be turned off, and the bus voltage may be equal to 36.2V.

The first control circuit 50 may be configured to control the second switching transistor Q2, the third switching transistor Q3 and the fourth switching transistor Q4 to be turned on in response to the second output voltage being greater than the third preset voltage and less than or equal to a fourth preset voltage, with the bus voltage being equal to the fourth preset voltage. For example, the fourth preset voltage may be 48.2V. In response to the second output voltage being greater than 36.2V and less than or equal to 48.2V, the first control circuit 50 may control the second switching transistor Q2, the third switching transistor Q3 and the fourth switching transistor Q4 to be turned on, and the bus voltage may be equal to 48.2V.

Herein, the fourth preset voltage may be greater than the third preset voltage, the third preset voltage may be greater than the second preset voltage, and the second preset voltage may be greater than the first preset voltage.

In some embodiments, the first control circuit 50 may be configured to control the operation of the second switching transistor Q2 through the first control signal, the operation of the third switching transistor Q3 through the second control signal, and the operation of the fourth switching transistor Q4 through a third control signal in response to the charged device being unplugged from the charging interface 20, so as to adjust the bus voltage and make the process of the bus voltage dropping from the charging voltage to the initial voltage last for the preset time.

The first control circuit 50 of this embodiment may control the operation of the second switching transistor Q2 through the first control signal, the operation of the third switching transistor Q3 through the second control signal, and the operation of the fourth switching transistor Q4 through the third control signal in response to the charged device being unplugged from the charging interface 20, so as to adjust the bus voltage and make the process of the bus voltage dropping from the charging voltage to the initial voltage last for the preset time. This may increase the duration of the bus voltage drop from the charging voltage to the initial voltage, obtain the slow drop of the bus voltage, and implement the soft turn-off strategy, which can prolong the service life of components such as the transformer 16 of the primary circuit 11. In addition, the charging device 100 may realize signal isolation and delayed energy release between the primary circuit 11 and the secondary circuit 12 through the optical coupling circuit 30, effectively reducing the energy accumulation of the primary circuit 11 at the moment of being turned off, reducing the transient stress caused by the turn-off of the charging device 100, and thus lowering the risk of damage to the charging device 100.

According to some embodiments of the present disclosure, as shown in FIG. 7, the primary circuit 11 of this embodiment may include the second control circuit 13, the PFC circuit 14, the flyback circuit 15 and the transformer 16. The second control circuit 13, the PFC circuit 14, the flyback circuit 15 and the transformer 16 may all be components in the related art, and will not be elaborated here.

The PFC circuit 14, the flyback circuit 15 and the transformer 16 may be connected in sequence. The transformer 16 may be connected to the secondary circuit 12. The second control circuit 13 may be respectively connected to the output terminal of the optical coupling circuit 30, the PFC circuit 14 and the flyback circuit 15, and may be configured to control the PFC circuit 14 and the flyback circuit 15 based on the feedback of the optical coupling circuit 30.

The second control circuit 13 may be configured to receive the control signal from the optical coupling circuit 30 in response to the charged device being unplugged from the charging interface 20, and control the PFC circuit 14 and the flyback circuit 15 based on the control signal to adjust the bus voltage, thereby realizing the adjustment of the bus voltage and making the process of the bus voltage dropping from the charging voltage to the initial voltage last for a preset time.

In some embodiments, the secondary circuit 12 may include a synchronous rectification circuit 17, a plurality of conversion circuits 18 and a plurality of power switches 19. The synchronous rectification circuit 17 may be connected to the corresponding charging interface 20 in sequence through the conversion circuits 18 and the power switches 19.

In summary, the output terminal of the optical coupling circuit 30 of the present disclosure may be connected to the primary circuit 11, and the input terminal of the optical coupling circuit 30 may be connected to the voltage adjustment circuit 40. The voltage adjustment circuit 40 may be connected to the secondary circuit 12 and the first control circuit 50 respectively. The first control circuit 50 may be connected to the secondary circuit 12 and configured to obtain the charging voltage of the charged device. In response to the charged device being unplugged from the charging interface 20, the first control circuit 50 may be configured to adjust the bus voltage of the secondary circuit 12, making the process of the bus voltage dropping from the charging voltage to the initial voltage last for the preset time. By adjusting the bus voltage of the secondary circuit 12 through the first control circuit 50 to make the process of the bus voltage dropping from the charging voltage to the initial voltage last for the preset time, the duration of the bus voltage dropping from the charging voltage to the initial voltage may be increased, thus realizing the slow drop of the bus voltage and implementing the soft turn-off strategy, which can prolong the service life of components such as the transformer 16 of the primary circuit 11. In addition, the charging device 100 may realize signal isolation and delayed energy release between the primary circuit 11 and the secondary circuit 12 through the optical coupling circuit 30, which may effectively reduce the energy accumulation of the primary circuit 11 at the moment of being turned off, reduce the transient stress caused by the turn-off of the charging device 100, and thus reduce the risk of damage to the charging device 100.

The above descriptions may be merely the embodiments of the present application, and may not limit the patent protection scope of the present disclosure. All equivalent structural transformations or equivalent process conversions made by using the contents of the specification and the accompanying drawings of the present disclosure, or any direct or indirect application thereof in other relevant technical fields, shall be similarly included in the patent protection scope of the present disclosure.

## Claims

1. A charging device (100), **characterized by** comprising:
a charging circuit (10), comprising a primary circuit (11) and a secondary circuit (12) connected to the primary circuit (11);
at least one charging interface (20), connected to the secondary circuit (12), wherein the charging circuit (10) charges a charged device through the charging interface (20);
an optical coupling circuit (30), a voltage adjustment circuit (40) and a first control circuit (50), wherein an output terminal of the optical coupling circuit (30) is connected to the primary circuit (11), an input terminal of the optical coupling circuit (30) is connected to the voltage adjustment circuit (40), the voltage adjustment circuit (40) is respectively connected to the secondary circuit (12) and the first control circuit (50), and the first control circuit (50) is connected to the secondary circuit (12) and configured to obtain a charging voltage of the charged device;
the first control circuit (50) is further configured to obtain a preset time, and in response to the charged device being unplugged from the charging interface (20), the first control circuit (50) is configured to adjust a bus voltage of the secondary circuit (12), making a process of the bus voltage dropping from the charging voltage to an initial voltage last for the preset time.

2. The charging device (100) as claimed in claim 1, wherein the charging device (100) comprises one charging interface (20), and the first control circuit (50) is configured to, in response to the charged device being unplugged from the charging interface (20), set a plurality of sequentially-decreasing reference voltages (VDAC) based on the preset time, the charging voltage and the initial voltage, and gradually reduce a first output voltage provided to the voltage adjustment circuit (40) according to the reference voltages (VDAC), so as to gradually reduce the bus voltage through the first output voltage.

3. The charging device (100) as claimed in claim 1 or 2, wherein the charging device (100) comprises one charging interface (20), and the voltage adjustment circuit (40) comprises a first resistor (R1), a second resistor (R2), a third resistor (R3), a fourth resistor (R4), a first capacitor (C1) and a second capacitor (C2); a first terminal (Vin) of the first control circuit (50) is connected to the secondary circuit (12) and configured to obtain the charging voltage of the charged device; a second terminal (OPTO) of the first control circuit (50) is connected to the secondary circuit (12) through the first resistor (R1) and the second resistor (R2), the optical coupling circuit (30) is connected in parallel with the first resistor (R1), and the second terminal (OPTO) of the first control circuit (50) is configured to output the first output voltage; a third terminal (IFB) of the first control circuit (50) is connected to the first resistor (R1) through the first capacitor (C1) and the third resistor (R3), and a fourth terminal (VFB) of the first control circuit (50) is connected to the first resistor (R1) through the second capacitor (C2) and the fourth resistor (R4).

4. The charging device (100) as claimed in claim 3, wherein the voltage adjustment circuit (40) further comprises a first switching transistor (Q1), a fifth resistor (R5) and a sixth resistor (R6); a fifth terminal (GPIO) of the first control circuit (50) is connected to a control terminal of the first switching transistor (Q1), a first terminal of the first switching transistor (Q1) is connected to the secondary circuit (12) through the fifth resistor (R5), a second terminal of the first switching transistor (Q1) is grounded, and the sixth resistor (R6) is connected between the control terminal and the second terminal of the first switching transistor (Q1);
the first control circuit (50) is configured to control the first switching transistor (Q1) to be turned on in response to the charged device being unplugged from the charging interface (20), so that an output capacitor of the secondary circuit (12) discharges through the fifth resistor (R5).

5. The charging device (100) as claimed in claim 1, wherein the charging device (100) comprises a plurality of charging interfaces (20), and the first control circuit (50) is configured to obtain a second output voltage of each of the charging interfaces (20), and control the voltage adjustment circuit (40) to adjust the bus voltage of the secondary circuit (12) based on the second output voltage.

6. The charging device (100) as claimed in claim 5, wherein the voltage adjustment circuit (40) comprises a seventh resistor (R7), an eighth resistor (R8), a voltage regulator (D), a ninth resistor (R9), a tenth resistor (R10), an eleventh resistor (R11), a twelfth resistor (R12), a third capacitor (C3), a second switching transistor (Q2), a thirteenth resistor (R13), a third switching transistor (Q3) and a fourteenth resistor (R14);
a second terminal of the voltage regulator (D) is connected to the secondary circuit (12) through the eighth resistor (R8) and the seventh resistor (R7), a third terminal of the voltage regulator (D) is grounded, one terminal of the ninth resistor (R9) is connected to the secondary circuit (12), the other terminal of the ninth resistor (R9) is grounded through the tenth resistor (R10) and the eleventh resistor (R11), the optical coupling circuit (30) is connected in parallel with the eighth resistor (R8), a first terminal of the voltage regulator (D) is connected between the tenth resistor (R10) and the eleventh resistor (R11), one terminal of the third capacitor (C3) is connected to the second terminal of the voltage regulator (D), and the other terminal of the third capacitor (C3) is connected between the tenth resistor (R10) and the eleventh resistor (R11) through the twelfth resistor (R12);
a first terminal of the second switching transistor (Q2) is connected between the tenth resistor (R10) and the eleventh resistor (R11) through the thirteenth resistor (R13), a second terminal of the second switching transistor (Q2) is grounded, a first terminal of the third switching transistor (Q3) is connected between the tenth resistor (R10) and the eleventh resistor (R11) through the fourteenth resistor (R14), a second terminal of the third switching transistor (Q3) is grounded, and control terminals of the second switching transistor (Q2) and the third switching transistor (Q3) are respectively connected to the first control circuit (50).

7. The charging device (100) as claimed in claim 6, wherein the first control circuit (50) comprises a micro control unit (51) and a protocol chip (U1), the protocol chip (U1) is respectively connected to the secondary circuit (12) and the micro control unit (51), the micro control unit (51) is respectively connected to the control terminals of the second switching transistor (Q2) and the third switching transistor (Q3), and the micro control unit (51) obtains the second output voltage through the protocol chip (U1);
the micro control unit (51) is configured to control the second switching transistor (Q2) and the third switching transistor (Q3) to be turned off in response to the second output voltage being less than or equal to a first preset voltage, with the bus voltage being equal to the first preset voltage;
the micro control unit (51) is configured to control an operation of the second switching transistor (Q2) through a first control signal and control the third switching transistor (Q3) to be turned off in response to the second output voltage being greater than the first preset voltage and less than or equal to a second preset voltage, with the bus voltage being greater than the first preset voltage and less than or equal to the second preset voltage;
the micro control unit (51) is configured to control the operation of the second switching transistor (Q2) through the first control signal and control the operation of the third switching transistor (Q3) through a second control signal in response to the second output voltage being greater than the second preset voltage and less than or equal to a third preset voltage, with the bus voltage being greater than the second preset voltage and less than or equal to the third preset voltage, the third preset voltage being greater than the second preset voltage, and the second preset voltage being greater than the first preset voltage.

8. The charging device (100) as claimed in claim 7, wherein the micro control unit (51) is configured to control the operation of the second switching transistor (Q2) through the first control signal and control the operation of the third switching transistor (Q3) through the second control signal in response to the charged device being unplugged from the charging interface (20), so as to adjust the bus voltage and make the process of the bus voltage dropping from the charging voltage to the initial voltage last for the preset time.

9. The charging device (100) as claimed in claim 6, wherein the voltage adjustment circuit (40) further comprises a fourth switching transistor (Q4) and a fifteenth resistor (R15); a first terminal of the fourth switching transistor (Q4) is connected between the tenth resistor (R10) and the eleventh resistor (R11) through the fifteenth resistor (R15), a second terminal of the fourth switching transistor (Q4) is grounded, and a control terminal of the fourth switching transistor (Q4) is connected to the first control circuit (50).

10. The charging device (100) as claimed in claim 9, wherein the first control circuit (50) is configured to control the second switching transistor (Q2), the third switching transistor (Q3) and the fourth switching transistor (Q4) to be turned off in response to the second output voltage being less than or equal to a first preset voltage, with the bus voltage being equal to the first preset voltage;
the first control circuit (50) is configured to control the second switching transistor (Q2) to be turned on and control the third switching transistor (Q3) and the fourth switching transistor (Q4) to be turned off in response to the second output voltage being greater than the first preset voltage and less than or equal to a second preset voltage, with the bus voltage being equal to the second preset voltage;
the first control circuit (50) is configured to control the second switching transistor (Q2) and the third switching transistor (Q3) to be turned on and control the fourth switching transistor to be turned off in response to the second output voltage being greater than the second preset voltage and less than or equal to a third preset voltage, with the bus voltage being equal to the third preset voltage;
the first control circuit (50) is configured to control the second switching transistor (Q2), the third switching transistor (Q3) and the fourth switching transistor (Q4) to be turned on in response to the second output voltage being greater than the third preset voltage and less than or equal to a fourth preset voltage, with the bus voltage being equal to the fourth preset voltage;
the fourth preset voltage is greater than the third preset voltage, the third preset voltage is greater than the second preset voltage, and the second preset voltage is greater than the first preset voltage.

11. The charging device (100) as claimed in claim 1, wherein the primary circuit (11) comprises a second control circuit (13), a PFC circuit (14), a flyback circuit (15) and a transformer (16); the PFC circuit (14), the flyback circuit (15) and the transformer (16) are connected in sequence, the transformer (16) is connected to the secondary circuit (12), the second control circuit (13) is respectively connected to the output terminal of the optical coupling circuit (30), the PFC circuit (14) and the flyback circuit (15), and the second control circuit (13) is configured to receive a control signal from the optical coupling circuit (30) in response to the charged device being unplugged from the charging interface (20), and control the PFC circuit (14) and the flyback circuit (15) based on the control signal, so as to adjust the bus voltage.

12. The charging device (100) as claimed in claim 2, wherein the first control circuit (50) comprises an operational amplifier (52), a switching transistor (Q), a first voltage-dividing resistor (Rt) and a second voltage-dividing resistor (Rb); a first terminal (Vin) of the first control circuit (50) is connected to the secondary circuit (12) and grounded through the first voltage-dividing resistor (Rt) and the second voltage-dividing resistor (Rb), a first input terminal of the operational amplifier (52) receives the reference voltages (VDAC), a second input terminal of the operational amplifier (52) is connected between the first voltage-dividing resistor (Rt) and the second voltage-dividing resistor (Rb), a fourth terminal (VFB) of the first control circuit (50) is connected to the second input terminal of the operational amplifier (52), an output terminal of the operational amplifier (52) is connected to a control terminal of the switching transistor (Q), a first terminal of the switching transistor (Q) is connected to the voltage adjustment circuit (40) through a second terminal (OPTO) of the first control circuit (50), and a second terminal of the switching transistor (Q) is grounded.

13. The charging device (100) as claimed in claim 3, wherein the optical coupling circuit (30) comprises a light source (31), a photoelectric sensor (32), a first voltage regulator (D1), a resistor (R0) and a capacitor (C4); the light source (31) is connected in parallel with the first resistor (R1), one terminal of the photoelectric sensor (32) is connected to the second control circuit (13) of the primary circuit (11) through the resistor (R0), an anode of the first voltage regulator (D1) is grounded, a cathode of the first voltage regulator (D1) is connected to one terminal of the photoelectric sensor (32), one terminal of the capacitor (C4) is connected between the second control circuit (13) and the resistor (R0), the other terminal of the capacitor (C4) is grounded, and the other terminal of the photoelectric sensor (32) is grounded.

14. The charging device (100) as claimed in claim 3, wherein the secondary circuit (12) comprises a bus (121), a power switch (Qvbus), an output capacitor (C5) and a resistor (Rc); the bus (121) is connected to a terminal (Vbus) of the charging interface (20) through the power switch (Qvbus), the power switch (Qvbus) is connected to a terminal (Gate) of the first control circuit (50) through the resistor (Rc), the bus (121) is grounded through the output capacitor (C5) and connected to the second resistor (R2), and a terminal (GND) of the first control circuit (50) is grounded.

15. The charging device (100) as claimed in claim 5, wherein the secondary circuit (12) comprises a synchronous rectification circuit (17), a plurality of conversion circuits (18) and a plurality of power switches (19); the synchronous rectification circuit (17) is connected to a corresponding charging interface (20) in sequence through the conversion circuits (18) and the power switches (19).
